# EUROPÄISCHE PATENTSCHRIFT

(11) **EP 2 601 244 B1**
(45) Veröffentlichungstag und Bekanntmachung des Hinweises auf die Patenterteilung: **20.05.2015**
(21) Anmeldenummer: 11736311.9
(22) Anmeldetag: 06.07.2011
(51) Int. Cl.: C08G 77/46, C08J 9/00, C08G 77/38

(54) **SILIKONCOPOLYMERE MIT SEITENSTÄNDIGEN ÜBER ALLYLGLYCIDYLETHER UND VERWANDTE VERBINDUNGEN ANGEBUNDENEN ALKYLRESTEN UND IHRE VERWENDUNG ALS STABILISATOREN ZUR HERSTELLUNG VON POLYURETHANWEICHSCHÄUMEN**
SILICONE COPOLYMERS WITH PENDANT ALKYL RADICALS ATTACHED VIA ALLYL GLYCIDYL ETHER AND RELATED COMPOUNDS, AND USE THEREOF AS STABILIZERS FOR PRODUCTION OF FLEXIBLE POLYURETHANE FOAMS
COPOLYMÈRES DE SILICONE COMPRENANT DES RESTES ALKYLE LATÉRAUX LIÉS PAR DES ALLYLGLYCIDYLÉTHERS ET DES COMPOSÉS APPARENTÉS ET LEUR UTILISATION COMME STABILISANTS POUR LA FABRICATION DE MOUSSES SOUPLES DE POLYURÉTHANE

(30) Priorität: 24.02.2011 DE 102011004651; 06.08.2010 DE 102010039004
(43) Veröffentlichungstag der Anmeldung: 12.06.2013
(73) Patentinhaber: Evonik Degussa GmbH, 45128 Essen (DE)
(72) Erfinder: HUBEL, Roland, 45136 Essen (DE); TERHEIDEN, Annegret, 46519 Alpen (DE)
(86) Internationale Anmeldenummer: PCT/EP2011/061355
(87) Internationale Veröffentlichungsnummer: WO 2012/016776

(56) Entgegenhaltungen:
- EP-A1- 1 439 200
- EP-A1- 2 107 077
- WO-A1-2009/065644
- DE-A1-102008 000 266

## Beschreibung

Die vorliegende Erfindung betrifft Silikoncopolymere, Zusammensetzungen die diese Silikoncopolymere enthalten, ein Verfahren zur Herstellung eines Polyurethanschaums, bei dem ein entsprechendes Silikoncopolymer oder eine entsprechende Zusammensetzung eingesetzt wird, Polyurethanschaum welcher durch das Verfahren erhältlich ist sowie Artikel enthaltend oder bestehend aus einem entsprechendem Polyurethanschaum.

Polyurethane unterschiedlicher Art werden durch die Polymerisation von Diisocyanaten, wie z. B. 4,4'-Methylenbis(phenylisocyanat), kurz MDI, oder 2,4-Toluoldiisocynat, kurz TDI, mit Polyetherpolyolen oder Polyesterpolyolen hergestellt. Polyetherpolyole können z. B. durch Alkoxylierung von polyhydroxyfunktionellen Startern gefertigt werden. Geläufige Starter sind z. B. Glykole, Glycerin, Trimethylolpropan, Pentaerythrit, Sorbit oder Saccharose. Bei der Herstellung von Polyurethanschäumen kommen zusätzliche Treibmittel zum Einsatz, wie z. B. Pentan, Methylenchlorid, Aceton oder Kohlenstoffdioxid. Üblicherweise werden zur Stabilisierung des Polyurethanschaums oberflächenaktive Substanzen, insbesondere Tenside eingesetzt. Neben einigen wenigen rein organischen Tensiden werden aufgrund ihres höheren Grenzflächenstabilisierungspotentials meist Silikontenside verwendet.

Eine Vielzahl verschiedener Polyurethanschäume, wie beispielsweise Heißweichschaum, Kaltschaum, Esterschaum, PUR-Härtschaum und PIR-Hartschaum sind bekannt. Die hierbei eingesetzten Stabilisatoren sind auf die jeweilige Endanwendung passgenau entwickelt und zeigen üblicherweise eine deutlich veränderte Performance, falls sie bei der Herstellung anderer Schaumarten eingesetzt werden.

Im Stand der Technik werden die zur Polyurethanschaumstabilisierung verwendeten Polysiloxan-Polyoxyalkylen-Blockmischpolymerisate häufig durch edelmetallkatalysierte Hydrosilylierung von ungesättigten Polyoxyalkylenen mit SiH-funktionellen Siloxanen, sogenannten Wasserstoffsiloxanen, wie beispielsweise in der EP 1 520 870 beschrieben hergestellt. Die Hydrosilylierung kann batchweise oder kontinuierlich, wie beispielsweise in der DE 198 59 759 C1 beschrieben, durchgeführt werden.

Ein Vielzahl weiterer Schriften, wie beispielsweise WO 2009/065644 A1, die EP 0 493 836 A1, US 5,565,194 oder EP 1 350 804 offenbart jeweils speziell zusammengesetzte Polysiloxan-Polyoxyalkylen-Blockmischpolymerisate zur Erfüllung spezifischer Anforderungsprofile für Schaumstabilisatoren in diversen Polyurethanschaumformulierungen. Dabei werden zur Herstellung der jeweiligen Stabilisatoren häufig Gemische aus zwei oder drei bevorzugt endverkappten Allylpolyethern in der Hydrosilylierung eingesetzt, deren Molgewichte kleiner als 6000 g/mol, bevorzugt kleiner als 5500 g/mol, sind. Mittels alkalischer Alkoxylierung sind Polyether mit Molgewichten über 5500 g/mol nicht ohne weiteres zugänglich, da mit zunehmender Kettenlänge Nebenreaktionen dominieren, die den Kettenabbruch fördern.

Mit Blick auf die langfristig begrenzte Verfügbarkeit fossiler Ressourcen, namentlich Öl, Kohle und Gas, und vordem Hintergrund steigender Rohölpreise gab es innerhalb der letzten Jahre ein gesteigertes Interesse Polyole auf Basis nachwachsender Rohstoffe zur Herstellung von Polyurethanschäumen einzusetzen (WO 2005/033167 A2 ;US 2006/0293400 A1). Mittlerweile sind auf dem Markt eine Reihe dieser Polyole von verschiedenen Herstellern verfügbar (WO2004/020497 US2006/0229375, WO2009/058367). In Abhängigkeit vom Basis-Rohstoff (z. B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden:
a) Polyole auf Basis nachwachsender Rohstoffe, die soweit modifiziert werden, dass sie zu 100% zur Herstellung von Polyurethanschaumstoffen eingesetzt werden können (WO2004/020497, US2006/0229375),
b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367, US6433121).

Insbesondere die Verwendung von pflanzlichen Polyolen der Gruppe B hat deutliche Auswirkungen auf die Herstellung von Polyurethanweichblockschäumen, sowohl auf die Prozessführung als auch auf die physikalisch-chemischen Eigenschaften des resultierenden Schaums. So führt beispielsweise die Verwendung von pflanzlichen Polyolen hergestellt aus Sojabohnenöl oder Palmöl mit steigender Einsatzmenge unter sonst gleichen Prozessbedingungen zu einer Verlängerung der Steigzeit, einer Veränderung der Härte und Luftdurchlässigkeit sowie zu einer Abnahme der Bruchdehnung, Zugfestigkeit und Elastizität des Schaums. Einigen Veränderungen, wie z.B. Steigzeit und Luftdurchlässigkeit können durch eine entsprechende Anpassung der Formulierung, d.h. zum Beispiel der Katalysatorkombination, entgegengewirkt werden. Andere physikalische Eigenschaften wie beispielsweise Härte, Bruchdehnung, Zugfestigkeit und Elastizität bleiben jedoch nachteilig verändert.

Aufgabe der vorliegenden Erfindung war es deshalb, Stabilisatoren bzw. Additive bereitzustellen, die eine Verbesserung der physikalischen Eigenschaften von Polyurethanweichblockschäumen ermöglichen, die einen hohen Anteil an Polyolen pflanzlichen Ursprungs aufweisen.

Überraschenderweise wurde gefunden, dass diese Aufgabe gelöst werden kann durch den Einsatz von Silikoncopolymere, die durch Reaktion von SiH-Gruppen aufweisenden Siloxanen mit speziellen Verbindungen, die eine oder mehrere gegenüber SiH-Gruppen reaktive Gruppen, insbesondere C-C-Mehrfachbindungen aufweisende Gruppen, sowie ggf. mindestens eine OH-Gruppe aufweisen, erhalten werden.

Gegenstand der vorliegenden Erfindung sind Silikoncopolymere der Formel (I) wie nachfolgend beschrieben und Zusammensetzungen die diese Silikoncopolymere enthalten.

Ebenfalls Gegenstand der vorliegenden Erfindung ist ein Verfahren zur Herstellung eines Polyurethanschaums, bei dem ein entsprechendes Silikoncopolymer oder eine entsprechende Zusammensetzung eingesetzt wird.

Außerdem ist Gegenstand der vorliegenden Erfindung ein Polyurethanschaum, welcher durch das Verfahren erhältlich ist, sowie Artikel enthaltend oder bestehend aus einem entsprechenden Polyurethanschaum.

Durch die Verwendung der erfindungsgemäßen Silikoncopolymeren der Formel (I) als Stabilisatoren, können Polyurethanweichschaumstoffe unter Verwendung von pflanzlichen Polyolen hergestellt werden, die im Vergleich mit Polyurethanweichschaumstoffen, die unter Einsatz herkömmlicher Stabilisatoren hergestellt wurden, verbesserte physikalische Eigenschaften aufweisen.

Die erfindungsgemäßen Silikoncopolymere haben weiterhin den Vorteil, dass sie bei der Herstellung von Polyurethanheißweichschäumen unter Verwendung von pflanzlichen Polyolen zu feinzelligen Polyurethanweichschäumen führen.

Die erfindungsgemäßen Silikoncopolymere und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Wenn nicht anders angegeben wurde die Molmasse der eingesetzten Verbindungen durch Gelpermeationschromatographie (GPC) und die Bestimmung der Struktur der eingesetzten Verbindungen durch NMR-Methoden, insbesondere durch ¹³C- und ²⁹Si-NMR bestimmt.

Die erfindungsgemäßen Silikoncopolymere sind gemäß der Formel (I) 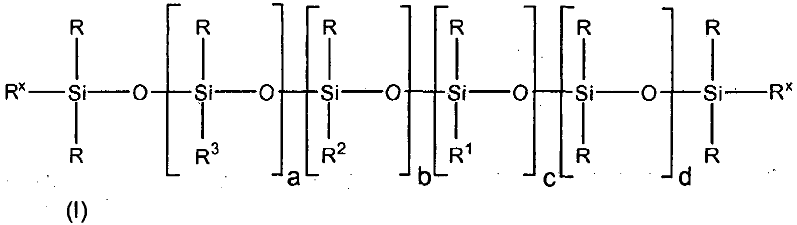 mit
a = 1 bis 178,
b, c und d unabhängig von einander 0 bis 177,
die Reste R unabhängig voneinander gleiche oder verschiedene Alkylreste,
R¹ = gleich oder verschieden ein Sauerstoff aufweisender Kohlenwasserstoffrest,
R² = gleich oder verschieden ein Sauerstoff aufweisender Kohlenwasserstoffrest,
R³=R^{3b} ,
R^{3b} = -(CH₂)_{z}-O-CH₂-C(CH₂CH₃)(CH₂OR^{y})-CH₂-O-CH₂-R¹⁰,
R^{x} unabhängig voneinander R¹, R², R³ oder R, vorzugsweise R³, bevorzugt R,
R^{y} unabhängig voneinander Wasserstoffrest, Alkyl-Rest, Acyl-Rest oder Polyetherrest -(C₂H₄O)ₒ-(C₃H₆O)ₚ-(CH₂-CHR'-O)_{q}-R⁴ mit o, p und q unabhängig voneinander 0 bis 100, wobei die Summe aus o + p jeweils größer 0 ist, mit R⁴ unabhängig voneinander Wasserstoffrest oder eine Alkylgruppe mit 1 bis 4 C-Atomen, eine Gruppe -C(O)-R"' mit R'" = Alkylrest, eine Gruppe -CH2-O-R', eine Alkylarylgruppe, oder eine Gruppe -C(O)NH-R' bedeutet, mit R' gleich oder verschieden ein unsubstituierter oder ggf. substituierter, beispielsweise mit Alkylresten, Arylresten, Halogenen oder Halogenalkyl- oder Halogenarylresten substituierter, Alkyl- oder Arylrest mit insgesamt 1 bis 12 Kohlenstoffatomen, vorzugsweise ein Methyl-, Ethyl-, Decyl- oder Phenylrest,
wobei R^{y} bevorzugt Wasserstoffrest ist,
z unabhängig von einander 2 bis 4,
R¹⁰ gleich oder verschieden CH=CH₂ oder CH₂-CH₂-R⁹, und
R⁹ gleich oder verschieden H oder ein über R^{3'} angebundener Siloxanrest der Formel (Ia) 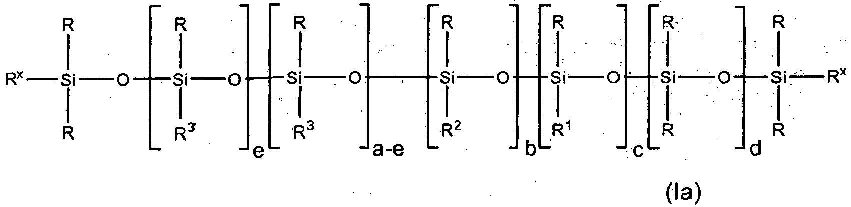 mit a bis d, R, R^{x} und R¹ bis R³ wie oben für Formel (I) definiert, wobei in Formel (Ia) die Summe aus a + e vorzugsweise 1 ist,
mit der Maßgabe, dass die Summe a+b+c+d pro Einheit der Formel (I) bzw. (Ia) von 38 bis 178 beträgt und die Summe der angebundenen Einheiten der Formeln (Ia) pro Silikoncopolymer der Formel (I) drei nicht übersteigt.

Besonders bevorzugte Siliconpolymere der Formel(I) sind solche die mindestens eine freie OH-Gruppe aufweisen.

Die Siliconpolymere der Formel(I) sind üblicherweise Mischungen von Molekülen, weshalb die angegebenen Indizes als Mittelwerte (Zahlenmittel) verstanden werden sollen. Die einzelnen Einheiten in den Molekülen können blockweise oder statistisch verteilt in den Molekülen der Formel (I) vorhanden sein.

Bevorzugt ist die Einheit -(CH₂-CHR'-O)_{q} eine aus Butylenoxid, Styroloxid oder Dodecenoxid entstandene Einheit. Es kann vorteilhaft sein, wenn pro Rest R¹ bzw. R² die vorhandenen Einheiten -(CH₂-CHR'-O)_{q} ausschließlich Butylenoxid, Styroloxid oder Dodecenoxid sind. Besonders bevorzugte Reste R¹ und/oder R² sind solche, bei denen die letzte Alkylenoxid-Einheit eine -(CH₂-CHR'-O)_{q} Einheit, insbesondere eine aus Butylenoxid, Styroloxid oder Dodecenoxid entstandene Einheit ist.

Vorzugsweise beträgt die mittlere molare Masse der Reste R³ ohne Berücksichtigung der Masse der gegebenenfalls vorhandenen Siloxanreste der Formel (Ia) kleiner 1500 g/mol, bevorzugt kleiner 800 g/mol.

Die mittlere Molmasse der Verbindungen der Formel (I) beträgt vorzugsweise kleiner 250.000 g/mol, bevorzugt kleiner 150.000 g/mol, bestimmt Mittels Gel-Permeations-Chromatographie (GPC).

Die verschiedenen Monomereinheiten der Polyorganosiloxankette und auch der Polyoxyalkylenkette(n) können untereinander blockweise aufgebaut sein oder einer statistischen Verteilung unterliegen. Die in den hier angeführten Formeln wiedergegebenen Indexzahlen und die Wertebereiche der angegebenen Indizes verstehen sich daher als die Mittelwerte der möglichen statistischen Verteilung der tatsächlichen isolierten Strukturen und/oder deren Mischungen.

Es kann vorteilhaft sein, wenn das Verhältnis der Summe aus a+b+c zu d von 0,02 zu 1 bis 1 zu 1, vorzugsweise von 0,05 zu 1 bis 0,5 zu 1 und besonders bevorzugt von 0,08 zu 1 bis 0,2 zu 1 beträgt.

In den erfindungsgemäßen Silikoncopolymeren sind die Indizes a, b und c vorzugsweise so gewählt, dass der Anteil der Reste R³ von 1 bis 30 mol-%, vorzugsweise 3 bis 20 mol-% und bevorzugt 5 bis 15 mol-% und der Anteil der Summe der Reste R¹ und R² von 70 bis 99 mol-%, vorzugsweise von 80 bis 97 mol-% und bevorzugt von 85 bis 95 mol% jeweils bezogen auf die Summe der Reste R¹, R² und R³ beträgt. Bevorzugt sind die Indizes a, b und c so gewählt, dass der Anteil der Reste R³ von 1 bis 30 mol-%, vorzugsweise 3 bis 20 mol% und bevorzugt 5 bis 15 mol%, der Anteil der Reste R¹ von 30 bis 75 mol-%, vorzugsweise 35 bis 65 mol-% und bevorzugt 40 bis 55 mol-% und der Anteil der Reste R² von 24 bis 65 mol-%, vorzugsweise 30 bis 50 mol-% und bevorzugt 35 bis 45 mol-% bezogen auf die Summe der Reste R¹, R² und R³ beträgt.

Es kann vorteilhaft sein, wenn der Rest R⁴ in den Resten R¹ und R² identisch ist. Besonders bevorzugt ist der Rest R⁴ ein Methyl- oder Acetyl-Rest -C(O)-CH₃.

Die erfindungsgemäßen Silikoncopolymere sind erhältlich durch das erfindungsgemäße Verfahren der Umsetzung von linearen Polyorganosiloxanen mit seitenständigen (und ggf. endständigen) SiH-Funktionen, mit einer Verbindung der Formel (IIb) und gegebenenfalls mit einer oder mehreren, eine endständige Doppelbindung und ein oder mehrere Sauerstoffatome aufweisenden Kohlenwasserstoffverbindungen.

R⁶-O-CH₂-C(CH₂CH₃)(CH₂OR^{y})-CH₂-O-CH₂-CH=CH₂ (IIb)

mit R^{y} wie oben angegeben,
R⁶ gleich CH₂=CH-(CH₂)ᵣ- mit r = 0 bis 2, vorzugsweise r = 1,

Die eingesetzten Polyorganosiloxane mit SiH-Funktionen werden so ausgewählt, dass bei der Umsetzung mit Verbindungen der Formel (IIb) Silikoncopolymeregemäß Formel (I) erhalten werden.

Die Polyorganosiloxane mit seitenständigen SiH-Funktionen können wie im Stand der Technik, beispielsweise in der EP 1 439 200 A oder der DE 10 2007 055485 A beschrieben, hergestellt werden.

Die erfindungsgemäßen Silikoncopolymere können auf verschiedene Weise unter Verwendung von aus dem Stand der Technik bekannten Verfahrensschritten erhalten werden. Die Umsetzung wird vorzugsweise als edelmetallkatalysierte Hydrosilylierung, bevorzugt wie in EP 1 520 870 beschrieben durchgerührt.

In dem erfindungsgemäßen Verfahren werden vorzugsweise Polyorganosiloxane mit seitenständigen und ggf. endständigen SiH-Funktionen, der Formel (V) eingesetzt, 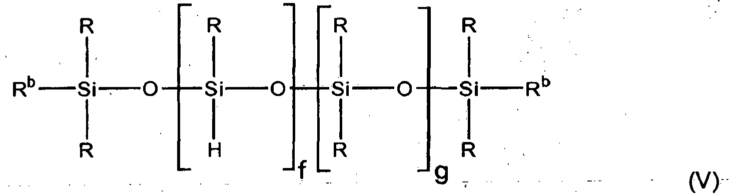 worin
f = 1 bis 178, vorzugsweise 1 bis 50, bevorzugt von 3 bis 20,
g = 0 bis 177, mit der Maßgabe, dass f + g = 20 bis 178, vorzugsweise 50 bis 100, bevorzugt 60 bis 80 und besonders bevorzugt 65 bis 75,
R wie oben definiert,
R^{b} = H oder R^{b}, vorzugsweise H, und
R wie oben definiert.

Die bevorzugt eingesetzten Polyorganosiloxane der Formel (V) bei denen 0 bis 10 mol-% der Reste R, vorzugsweise 0,05 bis 5 mol-% und bevorzugt 0,1 bis 1 mol-% der Reste R Alkylreste mit 12 bis 20, vorzugsweise 14 bis 18, bevorzugt 16 Kohlenstoffatome sind, können auf einfache Weise durch Umsetzung entsprechend geeigneter Wasserstoffsiloxane mit den entsprechenden ungesättigten Kohlenwasserstoffen z. B. durch die aus dem Stand der Technik bekannte Hydrosilylierung, wie z. B. in EP 1 520 870 beschrieben, erhalten werden.

Die bevorzugt verwendeten ungesättigten Polyoxyalkylene (polyether mit einer Vinyl-, insbesondere Allylendgruppe) der Formeln (III) und (IV) können nach dem literaturbekannten Verfahren der alkalischen Alkoxylierung von einem eine Vinylgruppe aufweisenden Alkohol, insbesondere Allylalkohol, oder unter Verwendung von DMC-Katalysatoren wie im Stand der Technik, beispielsweise in der DE 10 2007 057145 A1 beschrieben, hergestellt werden. Neben der basenkatalysierten oder DMC-katalysierten Reaktion sind auch saure Katalysen zur Alkoxylierung bekannt. So wird in DE 10 2004 007561 die Verwendung von HBF₄ und von Lewis-Säuren wie z.B. BF₃, AlCl₃ und SnCl₄ in der Alkoxylierungstechnologie beschrieben.

Verbindungen der Formel (IIb) können nach dem literaturbekannten Verfahren der alkalischen Alkoxylierung von einem mind. zwei Vinylgruppen aufweisenden Alkohol, insbesondere Trimethylolpropandiallylether (TMPDA), oder unter Verwendung von DMC-Katafysatoren wie im Stand der Technik, beispielsweise in der DE 10 2007 057145 A1 beschrieben, hergestellt werden. Neben der basenkatalysierten oder DMC-katalysierten Reaktion sind auch saure Katalysen zur Alkoxylierung bekannt. So wird in DE 10 2004 007561 die Verwendung von HBF₄ und von Lewis-Säuren wie z.B. BF₃, AlCl₃ und SnCl₄ in der Alkoxylierungstechnologie beschrieben.

Die erfindungsgemäßen Silikoncopolymere können als solche oder in Kombination mit anderen zur Herstellung von Polyurethanschäumen eingesetzten Substanzen vorliegen bzw. verwendet werden.

Vorzugsweise liegen die erfindungsgemäßen Silikoncöpolymere in Form von Zusammensetzungen vor, die ein oder mehrere erfindungsgemäße Silikoncopolymere und des weiteren eine oder mehrere bei der Herstellung von Polyurethanschäumen verwendbare Substanzen, ausgewählt aus Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen, Aminkatalysatoren, Metallkatalysatoren und Puffersubstanzen, enthalten. Es kann vorteilhaft sein, wenn die erfindungsgemäße Zusammensetzung ein oder mehrere Lösungsmittel, vorzugsweise ausgewählt aus Glykolen, Alkoxylaten oder Ölen synthetischer und/oder natürlicher Herkunft, enthält.

Die erfindungsgemäßen Silikoncopolymere bzw. die diese enthaltenden Zusammensetzungen können in allen herkömmlichen Verfahren zur Herstellung von Polyurethanschäumeri, wie z. B. von Polyurethan-Weichschaum,-Heißweichschaum, -Hartschaum, -Kaltschaum, -Esterschaum, viscoelastischem Weichschaum oder auch High Resilience-Schaum (HR-Schaum), insbesondere zur Herstellung von Polyurethanweichschäumen, eingesetzt werden. Das erfindungsgemäße Silikoncopolymer wird vorzugsweise als Schaumstabilisator eingesetzt.

Das efindungsgemäße Verfahren zur Herstellung eines Polyurethanschaums, zeichnet sich demgemäß dadurch aus, dass ein erfindungsgemäßes Silikoncopolymer oder eine erfindungsgemäße Zusammensetzung eingesetzt wird. In dem erfindungsgemäßen Verfahren werden als Polyolkomponente teilweise oder vollständig solche eingesetzt, die auf natürlichen (nachwachsenden) Rohstoffen basieren. Bevorzugt werden im erfindungsgemäßen Verfahren als Polyolkomponenten Mischungen von Polyolen eingesetzt, die mindestens 25 Gew.-% an Polyolen aufweisen, die auf natürlichen (nachwachsenden) Rohstoffen basieren.

Vorzugsweise wird der PU-Schaum dadurch erzeugt, dass eine Mischung enthaltend zumindest einen Urethan- und/oder Isocyanurat-Katalysatör, zumindest ein Treibmittel, zumindest eine Isocyanatkomponente und zumindest eine Polyolkomponente verschäumt wird.

Neben den genannten Komponenten kann die Mischung weitere Bestandteile aufweisen, wie z. B. optional (weitere) Treibmittel, optional Präpolymere, optional Flammschutzmittel und optional weitere Additive, wie z. B. Füllstoffe, Emulgatoren, Emulgatoren, die auf der Umsetzung von hydroxyfunktionellen Verbindungen mit Isocyanat beruhen, Stabilisatoren, wie z. B. Si-haltige und nicht Si-haltige, insbesondere Si-haltige und nicht Si-haltige organische Stabilisatoren und Tenside, Viskositätssenker, Farbstoffe, Antioxidantien, UV-Stabilisatoren oder Antistatika. Es versteht sich von selbst, dass der Fachmann zur Herstellung der unterschiedlichen Polyurethanweichschaumstoff-Typen, d.h. Heiß-, Kalt- oder Ester-Polyurethanweichschaumstoffe, die hierfür jeweils notwendigen Substanzen, wie z. B. Isocyanat, Polyol, Präpolymer, Stabilisatoren, Tensid/Emulgator, etc. entsprechend auswählt, um den jeweils gewünschten Polyurethanweichschaumstoff-Typ zu erhalten.

Nachstehend sind eine Reihe von Schutzrechten angegeben, die geeignete Komponenten und Verfahren zur Herstellung der unterschiedlichen Polyurethanweichschaumstoff-Typen, d.h. Heiß-, Kalt- sowie Ester-Polyurethanweichschaumstoffe beschreiben, auf die im vollen Umfang Bezug genommen wird.

EP 0152878 A1; EP 0409035 A2; DE 102005050473 A1; DE 19629161 A1; DE 3508292 A1; DE 4444898 A1; EP 1061095 A1; EP 0532939 B1; EP 0867464 B1; EP1683831 A1; DE102007046860 A1.

Weitere Angaben zu den verwendeten Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Die nachstehenden Verbindungen, Komponenten und Additive sind lediglich beispielhaft genannt und können durch andere dem Fachmann bekannte Stoffe ersetzt werden.

Die erfindungsgemäßen Polyurethanweichschaumstoffe können Tenside, die nachstehend auch als "Emulgatoren" bezeichnet werden, enthalten.

Tenside, die bei der Herstellung von Polyurethanweichschaumstoffen eingesetzt werden, können ausgewählt sein aus der Gruppe umfassend anionische Tenside, kationische Tenside, nichtionische Tenside und/oder amphotere Tenside.

Als Tenside können erfindungsgemäß auch polymere Emulgatoren, wie Polyalkylpolyoxyalkylpolyacrylate, Polyvinylpyrrolidone oder Polyvinylacetate verwendet werden. Ebenso können als Tenside/Emulgatoren Präpolymere, die durch Umsetzung von geringen Mengen von Isocyanaten mit Polyolen erhalten werden (sog. Oligourethane), und die vorzugsweise gelöst in Polyolen vorliegen, eingesetzt werden.

Als Biozide können handelsübliche Produkte verwendet werden, wie Chlorophen, Benzisothiazolinon, Hexahydro-1,3,5-tris(hydroxyethyl-s-triazin); Chlor-methyl-isothiazolinon, Methyl-isothiazolinon oder 1,6-Dihydroxy-2,5-dioxohexan, die unter den Handelsnamen BIT 10, Nipacide BCP, Acticide MBS, Nipacide BK, Nipacide Cl, Nipacide FC bekannt sind.

Oftmals werden alle Komponenten außer den Polyolen und Isocyanaten vor dem Verschäumen zu einer Aktivatorlösung vermischt. Diese enthält dann u.a. die erfindungsgemäß verwendbaren Stabilisatoren (Siloxane), Katalysatoren bzw. Katalysatorkombination, das Treibmittel, beispielsweise Wasser, sowie eventuell weitere Additive, wie Flammschutz, Farbe, Biozide etc, je nach Rezeptur des Polyurethanweichschaumstoffs.

Bei den Treibmitteln unterscheidet man zwischen chemischen und physikalischen Treibmittel. Zu den chemischen Treibmitteln gehört Wasser, dessen Reaktion mit den Isocyanatgruppen zur Bildung von CO₂ führt. Die Rohdichte des Schaumstoffes lässt sich durch die zugegebene Wassermenge steuern, wobei die bevorzugten Einsatzmengen an Wasser zwischen 0,5 und 7,5 Teilen, bezogen auf 100,0 Teile Polyol, liegen. Darüber hinaus können alternativ und/oder auch zusätzlich, physikalische Treibmittel, wie Kohlendioxid, Aceton, Kohlenwasserstoffe, wie n-, iso- oder Cyclopentan, Cyclohexan, halogenierte Kohlenwasserstoffe, wie Methylenchlorid, Tetrafluorethan, Pentafluorpropan, Heptafluorpropan, Pentafluorbutan, Hexafluorbutan und/oder Dichlormonofluorethan, eingesetzt werden. Die Menge des physikalischen Treibmittels liegt dabei vorzugsweise im Bereich zwischen 1 bis 20 Gew.-Teilen, insbesondere 1 bis 15 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmitteln bevorzugt, welches bevorzugt in Kombination mit Wasser als chemischem Treibmittel verwendet wird.

Die Aktivatorlösung kann zusätzlich alle üblichen im Stand der Technik für Aktivatorlösungen bekannten Zusätze enthalten. Die Zusätze können ausgewählt sein aus der Gruppe umfassend Flammschutzmittel, UV-Stabilisatoren, Farbstoffe, Biozide, Pigmente, Zellöffner, Vernetzer und dergleichen.

Zur Herstellung eines Polyurethanweichschaumstoffs wird ein Gemisch aus Polyol, polyfunktionellem Isocyanat, Aminkatalysator, Kalium-, Zink- und/oder Zinn-organischer-Verbindung oder andere metallhaltige Katalysatoren, Stabilisator, Treibmittel, vorzugsweise Wasser zur Bildung von CO₂ und, falls nötig, Zusatz von physikalischen Treibmitteln, gegebenenfalls unter Zugabe von Flammschutzmitteln, UV-Stabilisatoren, Farbpasten, Bioziden, Füllstoffen, Vernetzern oder sonstigen üblichen Verarbeitungshilfsmitteln, umgesetzt.

Als Isocyanate können organische Isocyanatverbindungen verwendet werden, die mindestens zwei Isocyanat-Gruppen enthalten. Generell kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 60 bis 140 mol % relativ zu der Summe der isocyanatverbrauchenden Komponenten eingesetzt.

Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'-und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat und anderen Gruppen modifiziert wurden, sogenannte modifizierte Isocyanate.

Besonders bewährt haben sich als organische Polyisocyanate und kommen daher vorzugsweise zur Anwendung:
Toluylendiisocyanat, Gemische aus Diphenylmethandiisocyanat-Isomeren, Gemische aus Diphenylmethandiisocyanat und Polyphenylpolymethylpolyisocyanat oder Toluoldiisocyanat mit Diphenylmethandiisocyanat und/oder Polyphenylpolymethylpolyisocyanat oder so genannte Prepolymere.

Es können TDI (2,4- und 2,6-Toluylendiisocyanat-Isomerengemisch) als auch MDI (4,4'-Diphenylmethandiisocyanat) verwendet werden. Das sogenannte "crude MDI" oder "polymere MDI" enthält neben dem 4,4'- auch die 2,4'- und 2,2'-Isomeren sowie höherkernige Produkte. Als "pure MDI" bezeichnet man zweikernige Produkte aus überwiegend 2,4'- und 4,4'-Isomerengemischen bzw. deren Prepolymere. Weitere geeignete Isocyanate sind in den Patentschriften DE 444898 und EP 1095968 aufgeführt, auf die hier im vollen Umfang Bezug genommen wird.

Als Vernetzer werden niedermolekulare, gegenüber Isocyanaten reaktive mehrfunktionelle Verbindungen bezeichnet. Geeignet sind Hydroxyl- oder Aminterminierte Substanzen, wie Glycerin, Triethanolamin (TEOA), Diethanolamin (DEOA) und Trimethylolpropan. Die Einsatzkonzentration liegt üblicherweise zwischen 0,5 und 5 Teilen, bezogen auf 100,0 Teile Polyol je nach Formulierung, kann aber auch davon abweichen. Bei Verwendung von crude MDI bei der Formverschäumung übernimmt dies ebenfalls eine vernetzende Funktion. Der Gehalt an niedermolekularen Vernetzern kann daher bei steigender Menge an crude MDI entsprechend reduziert werden.

Die erfindungsgemäßen Formulierungen können sowohl in der Block- als auch in der Formverschäumung verwendet werden. Es können alle dem Fachmann bekannten Verfahren zur Herstellung von Polyurethanweichschaumstoffen verwendet werden. So kann zum Beispiel der Schäumungsprozess sowohl in horizontaler als auch in vertikaler Richtung in diskontinuierlichen oder kontinuierlichen Anlagen erfolgen, Ebenso können die erfindungsgemäßen Stabilisatorformulierungen für die CO₂-Technologie benutzt werden. Die Verwendung in Niederdruck- und Hochdruckmaschinen ist möglich, wobei die erfindungsgemäßen Formulierungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Als Polyolkomponenten auf Basis von nachwachsenden Rohstoffen (NOP), können z. B. die in den Patentschriften WO 2004/020497, US 2006/0229375, WO 2009/058367, WO 2006/094227, WO 2004/096882, US 2002/0103091, WO2006/116456 und EP 1678232 beschriebenen, eingesetzt werden. Bevorzugte NOP sind solche, die auf Basis von z. B. Rizinusöl, Sojabohnenöl, Erdnußöl, Rapsöl, Palmöl oder Sonnenblumenöl erhalten werden können. Mit Ausnahme des Rizinusöls enthalten die vorgenannten Pflanzenöle keine Hydroxylgruppen. Die Einführung der zur Polyurethanbildung erforderlichen Hydroxylgruppe kann nach verschieden Verfahren erfolgen, von denen hier einige beispielhaft genannt seien: Ozonolyse mit anschließender Hydrierung [Petrovic ZS, Zhang W, Javni I, Biomacromolecules 2005; 6: 713-9]; Epoxidierung mit anschließender Ringöffnung (WO 2009/058367; US6433121); Hydroformulierung mit anschließender Hydrierung (WO2004096744); Luftoxidation mit anschließender Ringöffnung oder Hydroformulierung (US 2006/0229375); mikrobiologische Überführung in OH-funktionelle Polyole [Hou CT, Adv. Appl. Microbiol. 1995; 41: 1-23]. Die OH-funktionalisierten Biopolyole können entweder direkt oder nach einer Alkoxylierung zur Herstellung von Polyurethanschäumen eingesetzt werden. Die Alkoxylierung der OH-funktionalisierten Biopolyole kann nach dem Verfahren der alkalischen Alkoxylierung oder unter Verwendung von DMC-Katalysatoren erfolgen.

Neben Polyolkomponenten auf Basis von nachwachsenden Rohstoffen, können als weitere Polyolkomponenten alle bekannten Polyolverbindungen in der Mischung enthalten sein.

Es kann sich hierbei um Polyether- oder Polyesterpolyole handeln, die typischerweise 2 bis 6 OH-Gruppen pro Molekül tragen und neben Kohlenstoff, Wasserstoff und Sauerstoff auch Heteroatome wie Stickstoff, Phosphor oder Halogene enthalten können; vorzugsweise werden Polyetherpolyole eingesetzt. Solche Polyole können nach bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, dass 2 bis 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3- Propylenoxid, 1,2- bzw. 2,3- Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als Stärtermolekül kommen Wasser oder 2- und 3-wertige Alkohole in Betracht, wie Ethylenglykol, Propandiol-1,2 und -1,3, Diethylenglykol, Dipropylenglykol, Glycerin, Trimethylolpropan usw. Auch polyfunktionelle Polyole wie z.B. Zucker können als Starter eingesetzt werden. Die Polyetherpolyole, vorzugweise Polyoxypropylenpolyoxyethylen-polyole besitzen eine Funktionalität von 2 bis 8 und zahlengemittelte Molekülargewichte im Bereich von 500 bis 8000, vorzugsweise 800 bis 4500. Weitere Polyole sind dem Fachmann bekannt und können zum Beispiel der EP-A-0 380 993 oder US-A-3 346557 entnommen werden, auf die im vollen Umfang Bezug genommen wird.

Bevorzugt werden zur Herstellung von Form- und hochelastischen Weichschaumstoffen zwei- und/oder dreifunktionelle Polyetheralkohole eingesetzt, die primäre Hydroxylgruppen, bevorzugt über 50 mol-%, aufweisen, insbesondere solche mit einem Ethylenoxidblock am Kettenende oder solche, die nur auf Ethylenoxid basieren.

Bevorzugt werden zur Herstellung von Blockweichschaumstoffen zwei- und/oder dreifunktionelle Polyetheralkohole eingesetzt, die sekundäre Hydroxylgruppen, bevorzugt über 80 mol-%, aufweisen, insbesondere solche mit einem Propylenoxidblock oder statistischen Propylen- und Ethylenoxidblock am Kettenende oder solche, die nur auf Propylenoxidblöcken basieren.

Eine weitere Klasse von Polyolen sind solche, die als Präpolymere durch Umsetzung von Polyol mit Isocyanat in einem Molverhältnis von 100 zu 1 bis 5 zu 1, bevorzugt 50 zu 1 bis 10 zu 1 erhalten werden. Solche Präpolymere werden vorzugsweise gelöst in Polyol eingesetzt, wobei das Polyol bevorzugt dem zur Herstellung der Präpolymeren eingesetzten Polyol entspricht.

Noch eine weitere Klasse von Polyolen stellen die sogenannten Füllkörperpolyöle (Polymerpolyole) dar. Diese zeichnen sich dadurch aus, dass sie feste organische Füllstoffe bis zu einem Feststoffgehalt von 40% oder mehr in disperser Verteilung, enthalten. Man verwendet unter anderem:
SAN-Polyole: Dies sind hochreaktive Polyole, welche ein Copolymer auf der Basis Styrol/Acrylnitril (SAN) dispergiert enthalten.
PHD-Polyole: Dies sind hochreaktive Polyole, welche Polyharnstoff ebenfalls in dispergierter Form enthalten.
PIPA-Polyole: Dies sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 Gew.-%, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine höhere Härte des Schaums.

Die Formulierungen mit feststoffhältigen Polyolen sind deutlich weniger eigenstabil und bedürfen daher neben der chemischen Stabilisierung durch die Vernetzungsreaktion eher auch zusätzlich einer physikalischen Stabilisierung.

Je nach Feststoffgehalt der Polyole werden diese alleine oder in Abmischung mit den oben genannten ungefüllten Polyolen eingesetzt.

Als Treibmittel können die bekannten Treibmittel eingesetzt werden. Vorzugsweise werden bei der Herstellung des Polyurethanschaums Wasser, Methylenchlorid, Pentan, Alkane, halogenierte Alkane, Aceton und/oder Kohlendioxid als Treibmittel eingesetzt.

Das Wasser kann der Mischung direkt zugegeben werden oder aber als Nebenkomponente eines der Edukte, wie z. B. der Polyolkomponente, mit dieser der Mischung zugegeben werden.

Neben physikalischen Treibmitteln und ggf. Wasser können auch andere chemische Treibmittel eingesetzt werden, die mit Isocyanate unter Gasentwicklung reagieren, wie beispielsweise Ameisensäure.

Als Katalysatoren können in der Mischung solche vorhanden sein, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N,N-Dimethylhexadecylamin, Silamorpholin, N-Ethylmorpholin, Tris(dimethylaminopropyl)hexahydro-1,3,5-triazin, N,N-Dimethylaminoethanol, Dimethylaminoethoxyethanol und Bis(dimethylaminoethyl)ether, Zinkverbindungen bzw. -salze, Zinnverbindungen bzw. -salze, bevorzugt Zinnricinolat, und Kaliumsalze wie Kaliumacetat und Kalium-2-ethylhexanoat.

Bevorzugt werden als Katalysatoren solche eingesetzt, die Zinnricinolat, Silamorpholin und/oder N,N-Dimethylhexadecylamin aufweisen.

Bei der Evonik Goldschmidt GmbH können z. B. ein Zinnricinolat aufweisender Katalysator unter der Bezeichnung Kosmos^{®} EF, ein Silamorpholin aufweisender Katalysator unter der Bezeichnung Tegoamin^{®} SMP, Tegoamin^{®} LDI oder Tegoamine^{®} ZE 4, erhalten werden.

Geeignete Einsatzmengen richten sich nach dem Typ des Katalysators und liegen üblicherweise im Bereich von 0,02 bis 5 pphp (= Gewichtsteilen bezogen auf 100 Gewichtsteile Polyol).

Mittels des erfindungsgemäßen Verfahrens ist ein Polyurethanschaum, insbesondere ein Polyurethanweichschaum erhältlich, der sich insbesondere dadurch auszeichnet, dass die zur Herstellung verwendete Polyolkomponente zumindest teilweise auf natürlichen (nachwachsenden) Rohstoffen basiert.

Mit dem erfindungsgemäßen Polyurethanschaum sind Artikel zugänglich die diesen Polyurethanschaum enthalten oder aus ihm bestehen. Solche Artikel können z.B. Möbelpolster, Kühlschrankisolierungen, Sprühschäume, Mefallverbundelemente für die (Bau-)Isolierung, Matratzen oder Autositzen sein.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Beispiel 1: Herstellung der erfindungsgemäßen Silikoncopolymere

Verwendete Allylverbindungen gemäß Formel (IIa) R⁶-O-CH₂-CH[CCH₂)_{1-g}(OR⁸)](CH₂)_{g}OR⁵ A1: R⁶ = CH₂=CH-(CH₂)-, R⁸ = H und R⁸ = -(CH₂)ₕ-CH[(CH₂)₍₁₋ₕ₎(OH)]-CH₂-O-CH₂-CH=CH₂ im molaren Verhältnis 2 zu 1, und R⁵=C₁₈H₃₇.

Verwendete Allyl-Polyether gemäß Formel (IIb):
A2: R⁶ = CH₂=CH-(CH₂)-, R^{y}= -(C₂H₄O)ₒ-(C₃H₆O)ₚ-(CH₂-CHR'-O)_{q}-R⁴ mit o = 0, p = 10, q = 0, R⁴ = H, MG = 685 g/mol.

Verwendete Allyl-Polyether gemäß Formel (III): R⁶-O-(C₂H₄O)ₛ-(C₃H₆O)ₜ-(CH₂CHR³-O)ᵤ-R⁴ A3: R⁶ = CH₂=CH-(CH₂)-, s = 13,9, t = 14,6, u = 0, R⁴ = C(O)-CH₃, MG = 1559 g/mol,
A4: R⁶= CH₂=CH-(CH₂), s = 4, t = 11, u = 1, R' = C₁₀H₂₁, R⁴ = H, MG = 1428 g/mol.

Verwendete Allyl-Polyether gemäß Formel (IV): R⁶-O-(C₂H₄O)ₒ-(C₃H₆O)ₚ-(CH₂CHR³)_{q}-R⁴ A5: R⁶ = CH₂=CH-(CH₂)-, s = 38, t = 40, u = 0, R⁴ = C(O)-CH₃, MG = 4094 g/mol.

Die Herstellung der Allyl-Polyether A2 bis A5 erfolgt nach dem literaturbekannten Verfahren der alkalischen Alkoxylierung von Allylalkoholen. Hierzu wurden der zu alkoxylierende Allylalkohol und Alkalimethanolat im Reaktor vorgelegt. Anschließend wurden die jeweiligen Alkyloxide bei einer Temperatur von 110°C und einem maximalen Druck von 2 bar zudosiert. Bei rein aus Ethylenoxid und Propylenoxid aufgebauten Polyethern erfolgte die Anlagerung statistisch. Bei A4 erfolgte zuerst die vollständige Anlagerung der Ethylenoxid- und Propylenoxideinheiten. Anschließend wurden zum Allylalkohol äquimolare Mengen von Dodecenoxid zugesetzt. Die erhaltenen alkalischen Polyether wurden durch Zugabe von wässriger Phosphorsäure neutralisiert und über Destillation und Filtration aufgearbeitet. Die Polyether A3 und A5 wurden durch Umsetzung mit Essigsäureanhydrid erhalten.

Verbindungen der Formel (IIa) wurden nach dem literaturbekannten Verfahren der alkalischen Alkoxylierung von einem Fettalkohol unter Zugabe von Allylglycidylether hergestellt. Zur Herstellung von A1 wurden Stearylalkohol und Alkalimethanolat im Reaktor vorgelegt. Anschließend wurden zum Stearylalkohol bei 50 bis 60 °C equimolare Mengen Allylglycidylether unter Stickstoff-Überlagerung zugeben. Die Reaktionsmischung wurde für 4 h Reaktionszeit auf 130°C aufgeheizt.

Das erhaltene alkalische Reaktionsprodukt wurde durch Zugabe von Phosphorsäure neutralisiert und über Destillation und Filtration aufgearbeitet.

Die Herstellung des Wasserstoffsiloxans erfolgte wie in der EP 1439200 B1 im erfindungsgemäßen Beispiel 1 Absatz [0022] beschrieben. Es wurde ein Wasserstoffsiloxan (SIL1) eingesetzt, welches der Formel (V) mit R^{b} = R = CH₃, f = 6, g = 68 entsprach.

Die Herstellung der in Tabelle 1 aufgeführten Silikoncopolymere erfolgt wie in der WO 2009/065644 in Beispiel 7 beschrieben.

**Tabelle 1: Nicht-Erfindungsgemäße Silikon-Copolymere (B. 1.1 - 1.2 und 1.4)**

| Beispiel Nr. | Einwaage Siloxan SEIL1 | Einwaagen der Allylverbindungen | | | | Aussehen des Silikoncopolymers |
|---|---|---|---|---|---|---|
| 1.1 | 52,0 g | 72,0 g A3 | 3,1 g A1 | 149,2 g A5 | | Hellgelb,klar |
| 1.2 | 50,0 g | 72,0 g A3 | 13,2 g A4 | 153,3 g A5 | | Hellgelb,klar |
| 1.3* | 50,0 g | 71,8 g A3 | 0,9 g Hexadecen | 4,7 g A2 | 172,5 g A5 | Hellgelb,klar |
| 1.4 | 50,0 g | 57,6 g A3 | 0,9 g Hexadecen | 164,9g A5 | 3,1 g A1 | Hellgelb,klar |

| | | | | | | |
|---|---|---|---|---|---|---|
| * B.1.3: Erfindungsgemäßes Silikon-Copolymer | | | | | | |

### Beispiel 2: Herstellung der Polyurethanschäume

Zur Herstellung der Polyurethanschäume wurden 400 g Polyol eingesetzt; die anderen Formulierungsbestandteile wurden entsprechend umgerechnet. Dabei bedeutete beispielsweise 1,0 Teil einer Komponente 1 g dieser Substanz je 100 g Polyol.

Zur Verschäumung wurden das Polyol, Wasser, Katalysator (Amin(e) und/oder die Zinnverbindung) und Stabilisator unter Rühren gut vermischt. Nach Zugabe des Isocyanats wurde mit einem Rührer 7 Sek. bei 3000 U/Min. gerührt und das Gemisch in einem mit Papier ausgekleideten Holzkasten (Grundfläche 27 cm × 27 cm) gegossen. Es entstand ein Schaumstoff, der den nachfolgend beschriebenen anw.endungstechnischen Tests unterzogen wurde.

Gemäß Rezepturen (Tabelle 3 und 4) basierend auf 4,0 Teilen Wässer wurden Polyurethanweichblockschäume unter Verwendung eines pflanzlichen Polyols auf Basis von Sojabohnenöl und unterschiedlichen Stabilisatoren sowie unterschiedlichen Aminkatalysatoren hergestellt. Die resultierenden Schäume wurden hinsichtlich ihrer Charakteristik beim Schäumvorgang und ihrer physikalischen Eigenschaften miteinander verglichen. Als Referenzschaum diente ein Polyurethanweichschaum der aus 100% Standardpolyol (petrochemischen Ursprungs) hergestellt wurde.

Referenzschäume, die kein Polyol auf Basis von pflanzlichen Rohstoffen aufweisen, wurden gemäß der in Tabelle 2 angegebenen Rezeptur hergestellt.

**Tabelle 2: Rezeptur 1a für den Referenzschaum. aus rein Mineralöl-basiertem Polyol (Angaben in Massenteilen)**

| | |
|---|---|
| 100 Teile | Polyol, Voranol^{®} CP 3322 (Dow Chemical)^{*1} |
| 4,0 Teile | Wasser |
| 0,8 Teile | Tegostab^{®} B 4900 (Evonik Goldschmidt GmbH) |
| 0,1 Teile | TEGOAMIN^{®} ZE1 (Evonik Goldschmidt GmbH) |
| 0,55 Teile | KOSMOS^{®} EF (Evonik Goldschmidt GmbH)) |
| 49,7 Teile Index <108> | Isocyanat (Toluylendiisocyanat T80) (80% 2,4-Isomer, 20% 2,6-Isomer) (Bayer Material Science AG) |

| | |
|---|---|
| *1 = Voranol® CP 3322, erhältlich bei der Firma Dow Chemical, hierbei handelt es sich um ein Polyethertriol mit der OH-Zahl 47. | |

Die Schäume, die ein Polyol basierend auf nachwachsenden Rohstoffen aufweisen, wurden gemäß der in Tabelle 3 und Tabelle 4 angegebenen Rezepturen hergestellt.

**Tabelle 3: Rezeptur 1b mit pflanzlichem Polyol (Angaben in Massenteilen)**

| | |
|---|---|
| 70 Teile | Polyol, Voranol^{®} CP 3322 (Dow Chemical)^{*1} |
| 30 Teile | pflanzliches Polyol auf Basis von Sojabohnenöl^{*2} |
| 4,0 Teile | Wasser |
| 0,8 Teile | Stabilisator |
| 0,1 Teile | TEGOAMIN^{®} ZE1 (Goldschmidt) |
| 0,55 Teile | KOSMOS^{®}EF (Goldschmidt) |
| 50,1 Teile Index <108> | Isocyanat (Toluylendiisocyanat T80) (80% 2,4-Isomer, 20% 2,6-Isomer) (Bayer Material Science AG) |

| | |
|---|---|
| *1 = Voranol^{®} CP 3322, erhältlich bei der Firma Dow Chemical, hierbei handelt es sich um ein Polyethertriol mit der OH-Zahl 47. *2 = BIOH^{®} X-0500 der Firma Cargill. | |

**Tabelle 4: Rezeptur 2 mit pflanzlichem Polyol (Angaben in Massenteilen)**

| | |
|---|---|
| 70 Teile | Polyol, Voranol^{®} CP 3322 (Dow Chemical)^{*1} |
| 30 Teile | pflanzliches Polyol auf Basis von Sojabohnenöl^{*2} |
| 4,0 Teile | Wasser |
| 0,8 Teile | Stabilisator |
| Variabel | TEGOAMIN^{®} 33, TEGOAMIN^{®}SMP TEGOAMIN^{®}ZE4, N,N-Dimethylhexadecylamin^{*3} |
| 0,18 Teile | KOSMOS^{®}29 (Goldschmidt) |
| 50,1 Teile Index <108> | Isocyanat (Toluylendiisocyanat T80) (80% 2,4-Isomer, 20% 2,6-Isomer) (Bayer Material Science AG) |

| | |
|---|---|
| *1 = Voranol^{®} CP 3322, erhältlich bei der Firma Dow Chemical, hierbei handelt es sich um ein Polyethertriol mit der OH-Zahl 47 mg KOH/g. *2 = BIOH^{®} X-0500 der Firma Cargill. *3 = N,N-Dimethylhexadecylamin, erhältlich bei der Firma Sigma Aldrich, 96%ig in Isopropanol | |

### Beispiel 3: Anwendungstechnische Tests

Die hergestellten Schäume wurden anhand folgender physikalischer Eigenschaften bewertet:
a) Rücksacken des Schaumstoffes nach dem Ende der Steigphase (=Rückfall).
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe
   Die Endhöhe des Schaumes wird dadurch bestimmt, dass der Rückfall bzw. das Nachsteigen von bzw. zu der Schaumhöhe nach dem Abblasen subtrahiert bzw. addiert wird.
c) Raumgewicht (RG)
   Die Bestimmung erfolgt, wie in ASTM D 3574 - 08 unter Test A beschrieben, durch Messung der Core Density.
d) Die Luftdurchlässigkeit des Schaums wurde durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen,
e) Stauchhärte CLD, 25%, 40%, 65% nach DIN EN ISO 3386-1.
f) Rückprallelastizität (Ball rebound test) nach ASTM D 1564-71.
g) Zugfestigkeit und Bruchdehnung nach DIN EN ISO 1798.
h) Zahl der Zellen pro cm.

Die Ergebnisse der anwendungstechnischen Tests für die verschiedenen Rezepturen und verwendeten Stabilisatoren sind in Tabelle 5 und 6 wiedergegeben. Die Ergebnisse für die Verwendung verschiedner Aminkatalysatoren sind in Tabelle 7 wiedergegeben.

**Tabelle 5: Ergebnisse der anwendungstechnischen Tests gemäß Rezeptur 1a bzw. Rezeptur 1 b**

| | Referenz (Rezeptur 1a) | PU-Schäume mit 30 Teilen pflanzlichem Polyol (Rezeptur 1 b) | | | |
|---|---|---|---|---|---|
| Stabilisator | Tegostab^{®} B4900 | Tegostab^{®} B4900 | Tegostab^{®} B8270 | Tegostab® B8244 | Beispiel 1.1 |
| Steigzeit (s) | 104 | 117 | 140 | 118 | 102 |
| Rückfall (cm) | -0,3 | -0,2 | -0,3 | +0,1 | -0,5 |
| Schaumhöhe (cm) | 29,5 | 30,1 | 30,4 | 31,6 | 29,2 |
| Luftdurchlässigkeit (mm Wassersäule) | 9 | 10 | 9 | 32 | 13 |
| Dichte (kg/m²) | 25,4 | 24,5 | 24,3 | 23,7 | 25,1 |
| CLD 26% | 3,8 | 2,9 | 2,6 | 3,1 | 3,7 |
| CLD 40% | 4 | 3,2 | 2,9 | 3,5 | 4,2 |
| CLD 65% | 7,7 | 6,8 | 5,9 | 7,6 | 8,8 |
| Rückprall-Elastizität (%) | 42 | 31 | 29 | 27 | 34 |
| Zugfestigkeit (kPa) | 111 | 85 | 88 | 81 | 119 |
| Bruchdehnung (%) | 134 | 115 | 112 | 108 | 126 |
| Zellen/cm | 15 | 14 | 14 | 14 | 15 |

**Tabelle 6: Ergebnisse der anwendungstechnischen Tests gemäß Rezeptur 2 mit 0,15 Teilen TEGOAMIN^{®}33**

| | PU-Schäume mit 30 Teilen pflanzlichem Polyol | | |
|---|---|---|---|
| Stabilisator | Tegostab^{®} B4900 | Beispiel 1.2 | Beispiel 1.3 |
| Steigzeit (s) | 121 | 123 | 126 |
| Rückfall (cm) | -0,4 | 0,0 | -0,4 |
| Schaumhöhe (cm) | 29,1 | 30,4 | 29,7 |
| Luftdurchlässigkeit (mm Wassersäule) | 16 | 20 | 22 |
| Dichte (kg/m³) | 24,7 | 23,6 | 24,9 |
| CLD 25% | 2,8 | 2,7 | 3,2 |
| CLD 40% | 3,1 | 2,9 | 3,5 |
| CLD 65% | 6,4 | 6,1 | 7,1 |
| Rückprall-Plastizität (%) | 31 | 34 | 33 |
| Zugfestigkeit (kPa) | 70 | 84 | 82 |
| Bruchdehnung (%) | 90 | 117 | 102 |
| Zellen/cm | 12 | 13 | 13 |

Die Ergebnisse der physikalischen Eigenschaften in Tabelle 5 zeigen, dass der Austausch von Standardpolyolen durch pflanzliche Polyole eine veränderte Steigzeit und Schaumhärte sowie eine deutliche Abnahme der Rückprall-Elastizität, Zugfestigkeit und Bruchdehnung zur Folge hat. Diese physikalischen Eigenschaften können durch den Einsatz existierender Stabilisatoren nicht positiv beeinflusst werden. Wird zur Verschäumung jedoch der nicht erfindungsgemäße Stabilisator 1.1 verwendet, so weist der resultierende Schaum eine zum Referenzschaum vergleichbare Härte auf. Ebenso können die physikalischen Eigenschaften wie Rückprall-Elastizität, Zugfestigkeit und Bruchdehnung verbessert werden. Ein weiterer Vorteil des nicht erfindungsgemäßen Stabilisators besteht darin, dass die Zellstruktur im Vergleich zu konventionellen Stabilisatoren verbessert werden kann.

Die Ergebnisse der Tabelle 6 zeigen, dass bei Verwendung der Stabilisatoren 1.2 und 1.3 die physikalischen Schaumeigenschaften Rückprallelastizität, Bruchdehnung, Zugfestigkeit und Zellstruktur gegenüber der Verwendung eines konventionellen Stabilisators verbessert werden können. Mit dem erfindungsgemäßen Stabilisator 1.3 lässt sich zudem eine Verbesserung der Schaumhärte erzielen.

Um den Einfluss des Aminkatalysators auf die Schaumeigenschaften zu untersuchen, wurden in einer Rezeptur basierend auf 4,0 Teilen Wasser gemäß Rezeptur 2 entsprechend Tabelle 4 verschiedene Aminkatalysatoren in Kombination mit dem nicht-erfindungsgemäßen Stabilisator 1.4 eingesetzt. Hierzu wurden die eingesetzten Aminmengen so eingestellt, dass vergleichbare Steigzeiten erhalten wurden und somit vergleichbare katalytische Bedingungen. Bei der Herstellung von Polyurethanschäumen ist die Steigzeit des Schaums ein Maß für die katalytische Aktivität der eingesetzten Katalysatoren. Die Einsatzmenge des Metallkatalysators KOSMOS^{®} 29 wurde hierbei konstant gelassen.

**Tabelle 7: Ergebnisse der anwendungstechnischen Tests für die Verwendung verschiedener Aminkatalysatoren in Kombination mit dem nicht-erfindungsgemäßen Stabilisator 1.4 (Angaben in Massenteilen)**

| | PU-Schäume mit 30 Teilen pflanzlichem Polyol entsprechend Tabelle 4 | | | |
|---|---|---|---|---|
| | Stabilisator Beispiel 1.4 | Stabilisator Beispiel 1.4 | Stabilisator Beispiel 1.4 | Stabilisator Beispiel 1.4 |
| Einsatzmenge TEGOAMIN^{®} 33 in Teilen | 0,28 | | | |
| Einsatzmenge TEGOAMIN ZE4 in Teilen | | 0,35 | | |
| Einsatzmenge TEGOAMIN^{®} SMP in Teilen | | | 0,26 | |
| Einsatzmenge N,N-Dimethylhexadecylamin¹⁾ in Teilen | | | | 0,3 |
| | | | | |
| Steigzeit (s) | 92 | 93 | 96 | 95 |
| Rückfall (cm) | -0,6 | -0,9 | -0,6 | -0,7 |
| Schaumhöhe (cm) | 30,6 | 31,0 | 30,8 | 30,1 |
| Luftdurchlässigkeit(mm Wassersäule) | 20 | 26 | 28 | 20 |
| Dichte (kg/m³) | 24,6 | 24,4 | 24,4 | 24,5 |
| CLD 25% | 2,6 | 2,8 | 2,9 | 2,6 |
| CLD 40% | 2,9 | 3,1 | 3,2 | 2,8 |
| CLD 65% | 5,8 | 6,2 | 6,4 | 5,5 |
| Rückprallelastizität (%) | 35 | 35 | 36 | 37 |
| Zugfestigkeit (kPa) | 72 | 70 | 80 | 80 |
| Bruchdehnung (%) | 134 | 127 | 130 | 165 |
| Zellen/cm | 14 | 14 | 14 | 14 |

| | | | | |
|---|---|---|---|---|
| 1) N,N-Dimethylhexadecylamin 96 Gew.-%ig in Isopropanol | | | | |

Die Ergebnisse der Tabelle 7 zeigen, dass die Verwendung von TEGOAMIN^{®}ZE4 und TEGOAMIN^{®}SMP, beides Stabilisatoren, die unter anderem Silamorpholin enthalten, zu einer Erhöhung der Schaumhärte führen, ohne dabei den Schaum zu schließen. Dies stellt einen Vorteil gegenüber anderen Aminen wie beispielsweise TEGOAMIN^{®}33 dar, da die Verwendung von Polyolen auf Basis nachwachsender Rohstoffe im Vergleich zu Standardpolyolen häufig zu einer Abnahme der Schaumhärte führt (vgl. Tabelle 6). Ein wesentlicher Vorteil des Einsatzes des Amins N,N-Dimethylhexadecylamin besteht darin, dass es zu einer deutlichen Verbesserung der Schaumeigenschaften Rückprallelastizität, Zugfestigkeit und Bruchdehnung führt. Dies stellt bei der Herstellung von Polyurethanweichschäumen mit Polyolen auf Basis nachwachsender Rohstoffe einen deutlichen Vorteil dar. Die Abnahme dieser physikalischen Eigenschaften mit steigendem Anteil an Polyolen auf Basis nachwachsender Rohstoffe stellt häufig den limitierenden Faktor für die Einsatzmenge derartiger Polyole dar.

Die Verschäumungsergebnisse zeigen somit, dass durch die Kombination der nicht-erfindungsgemäßen Stabilisatoren mit Aminen wie TEGOAMIN^{®}SMP; TEGOAMIN^{®}Z E 4 oder N , N-Dimethylhexadecylamin die physikalischen Schaumeigenschaften weiter verbessert werden können.

## Patentansprüche

1. Silikoncopolymer der Formel (I) 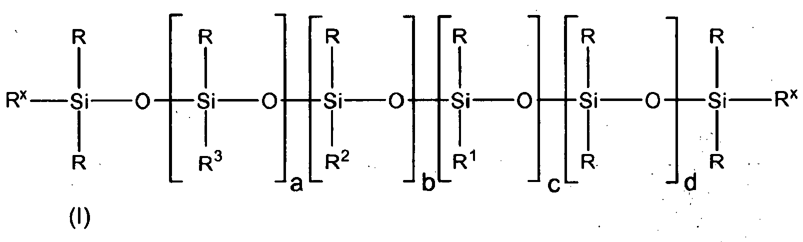 mit
a = 1 bis 178,
b, c und d unabhängig von einander 0 bis 177,
die Reste R unabhängig voneinander gleiche oder verschiedene Alkylreste,
R¹ = gleich oder verschieden ein Sauersoff aufweisender Kohlenvvasserstoffrest,
R² = gleich oder verschieden ein Sauerstoff aufweisender Kohlenwasserstoffrest,
R³ = R^{3b}
R^{3b} = - (CH₂)_{z}-O-CH₂-C(CH₂CH₃)(CH₂OR^{y})-CH₂-O-CH₂-R¹⁰,
R^{x} unabhängig voneinander R¹, R², R³ oder R, vorzugsweise R³, bevorzugt R,
R^{y} unabhängig voneinander Wasserstoffrest, Alkyl-Rest, Acyl-Rest oder Polyetherrest -(C₂H₄O)ₒ-(C₃H₆O)ₚ-(CH₂CHR'-O)_{q}-R⁴ mit o, p und q unabhängig voneinander 0 bis 100, wobei die Summe aus o + p jeweils größer 0 ist, mit R⁴ unabhängig voneinander Wasserstoffrest oder eine Alkylgruppe mit 1 bis 4 C-Atomen, eine Gruppe -C(O)-R"' mit R"' = Alkylrest, eine Gruppe -CH2-O-R', eine Alkylarylgruppe, oder eine Gruppe -C(O)NH-R' bedeutet, mit R' gleich oder verschieden ein unsubstituierter oder ggf. substituierter, beispielsweise mit Alkylresten, Arylresten, Halogenen oder Halogenalkyl- oder Halogenarylresten substituierter, Alkyl- oder Arylrest mit insgesamt 1 bis 12 Kohlenstoffatomen, vorzugsweise ein Methyl-, Ethyl-, Decyl- oder Phenylrest,
wobei R^{y} bevorzugt Wasserstoffrest ist,
z unabhängig von einander 2 bis 4,
R¹⁰ gleich oder verschieden CH=CH₂ oder CH₂-CH₂-R⁹, und
R⁹ gleich oder verschieden H oder ein über R^{3'} angebundener Siloxanrest der Formel (la) 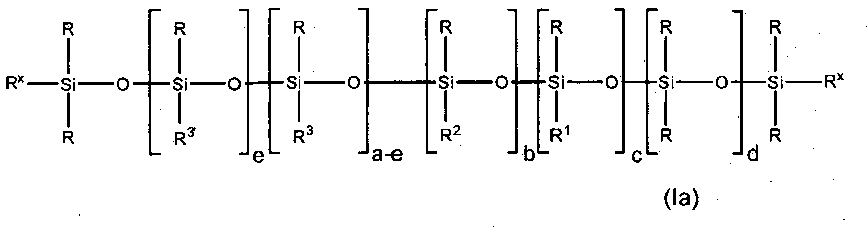 mit a bis d, R, R^{x} und R¹ bis R³ wie oben für Formel (I) definiert, wobei in Formel (la) die Summe aus a + e vorzugsweise 1 ist, mit der Maßgabe, dass die Summe a+b+c+d pro Einheit der Formel (I) bzw. (Ia) von 38 bis 178 beträgt und die Summe der angebundenen Einheiten der Formeln (la) pro Silikoncopolymer der Formel (I) drei nicht übersteigt.

2. Silikoncopolymer nach Anspruch 1, **dadurch gekennzeichnet, dass** die Indizes a, b und c so gewählt sind, dass der Anteil der Reste R³ von 1 bis 30 mol-% und der Anteil der Summe der Reste R¹ und R² von 70 bis 99 mol-% bezogen auf die Summe der Reste R¹, R² und R³ beträgt.

3. Silikoncopolymer nach Anspruch 2, **dadurch gekennzeichnet, dass** die Indizes a, b und c so gewählt sind, dass der Anteil der Reste R³ von 1 bis 20 mol-%, der Anteil der Reste R¹ von 30 bis 75 mol-% und der Anteil der Reste R² von 24 bis 65 mol-% bezogen auf die Summe der Reste R¹, R² und R³ beträgt.

4. Silikoncopolymer nach mindestens einem der Ansprüche 1 bis 3, **dadurch gekennzeichnet, dass** der Rest R⁴ in den Resten R¹ und R² identisch ist.

5. Silikoncopolymer nach Anspruch 4, **dadurch gekennzeichnet, dass** die Reste R⁴ ein Rest -C(O)-CH₃ sind.

6. Silikoncopolymer nach mindestens einem der Ansprüche 1 bis 5, **dadurch gekennzeichnet, dass** R¹ ein Rest -(CH₂)ₓ-O-(C₂H₄O)ₛ-(C₃H₆O)ₜ-(CH₂-CHR'-O)ᵤ-R⁴ mit einem mittleren Molekulargewicht von 100 bis 2000 g/mol und R² ein Rest -(CH₂)_{y}-O-(C₂H₄O)ₒ-(C₃H₆O)ₚ-(CH₂-CHR'-O)_{q}-R⁴ mit einem mittleren Molekulargewicht von größer 2000 bis 8000 g/mol ist, mit s, t und u unabhängig voneinander 0 bis 100, wobei die Summe aus s + t größer 0 ist, o, p, q, R⁴ und R' wie oben definiert, und x und y unabhängig voneinander 2 bis 4.

7. Zusammensetzungen enthaltend ein oder mehrere Silikoncopolymere nach mindestens einem der Ansprüche 1 bis 6, **dadurch gekennzeichnet, dass** die Zusammensetzung des weiteren eine oder mehrere bei der Herstellung von Polyurethanschäumen verwendbare Substanzen, ausgewählt aus Nukleierungsmitteln, zellverfeinernden Additiven, Zellöffnern, Vernetzern, Emulgatoren, Flammschutzmitteln, Tensiden/Emulgatoren, Antioxidantien, Antistatika, Bioziden, Farbpasten, festen Füllstoffen, Aminkatalysatoren, Metallkatalysatoren und Puffersubstanzen, enthält.

8. Verfahren zur Herstellung eines Polyurethanschaums, **dadurch gekennzeichnet, dass** ein Silikoncopolymer nach zumindest einem der Ansprüche 1 bis 6 oder eine Zusammensetzung gemäß Anspruch 7 eingesetzt wird.

9. Verfahren nach Anspruch 8, **dadurch gekennzeichnet, dass** bei der Herstellung des Polyurethanschaums Wasser, Methylenchlorid, Pentan, Alkane, halogenierten Alkane, Aceton oder Kohlendioxid als Treibmittel eingesetzt wird.

10. Verfahren nach Anspruch 8 oder 9, **dadurch gekennzeichnet, dass** als Polyolkomponente teilweise oder ausschließlich Polyole eingesetzt werden, die auf natürlichen Rohstoffen basieren.

11. Verfahren nach mindestens einem der Ansprüche 8 bis 10, **dadurch gekennzeichnet, dass** als Katalysatoren solche eingesetzt, die Zinnricinolat, Silamorpholin und/oder N,N-Dimethylhexadecylamin aufweisen.

12. Polyurethanschaum erhältlich durch ein Verfahren gemäß einem der Ansprüche 8 bis 11.

13. Artikel enthaltend oder bestehend aus einem Polyurethanschaum gemäß Anspruch 12.

## Claims

1. Silicone copolymer of formula (I) 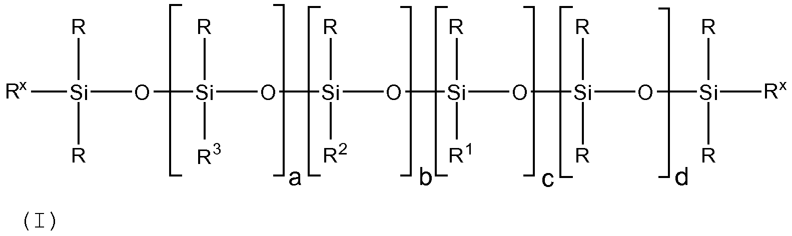 where
a is from 1 to 178,
b, c and d are each independently from 0 to 177, the radicals R are each independently identical or different alkyl radicals,
R¹ in each occurrence is an oxygen-containing hydrocarbon radical and is the same or different, R² in each occurrence is an oxygen-containing hydrocarbon radical and is the same or different, R³ is = R^{3b},
R^{3b} is = -(CH₂)_{z}-O-CH₂-C(CH₂CH₃)(CH₂OR^{y})-CH₂-O-CH₂-R¹⁰, R^{x} in each occurrence is independently R¹, R², R³ or R, preferably R³, preferably R,
R^{y} in each occurrence is independently a hydrogen radical, alkyl, acyl or a polyether moiety -(C₂H₄O)ₒ-(C₃H₆O)ₚ-(CH₂-CHR'-O)_{q}-R⁴ where o, p and q are each independently from 0 to 100 subject to the proviso that the sum total of o + p is in each case greater than 0, where R⁴ in each occurrence is independently a hydrogen radical or an alkyl group of from 1 to 4 carbon atoms, a -C(O)-R"' group where R"' = alkyl, a -CH2-0-R' group, an alkylaryl group, or a -C(O)NH-R' group, where R' is an unsubstituted or optionally substituted, for example with alkyl radicals, aryl radicals, halogens or haloalkyl or haloaryl radicals, alkyl or aryl radical having altogether from 1 to 12 carbon atoms, preferably a methyl, ethyl, decyl or phenyl radical, and is the same or different,
where R^{y} is preferably a hydrogen radical,
z in each occurrence is independently from 2 to 4, R¹⁰ in each occurrence is CH=CH₂ or CH₂-CH₂-R⁹, and is the same or different, and
R⁹ in each occurrence is the same or different and is H or an R^{3'}-attached siloxane moiety of formula (Ia) 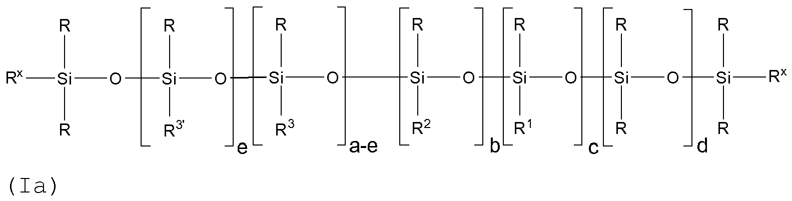 where a to d, R, R^{x} and R¹ to R³ are each as defined for formula (I), subject to the proviso that the sum total of a + e in formula (Ia) is preferably 1,
with the proviso that the sum total a+b+c+d per unit of formula (I) or (Ia) is from 38 to 178 and the sum total of the attached units of formulae (Ia) per silicone copolymer of formula (I) does not exceed three.

2. Silicone copolymer according to Claim 1, **characterized in that** the indices a, b and c are chosen such that the proportion of R³ radicals is from 1 to 30 mol% and the proportion of total R¹ and R² radicals is from 70 to 99 mol% based on the sum total of R¹, R² and R³ radicals.

3. Silicone copolymer according to Claim 2, **characterized in that** the indices a, b and c are chosen such that the proportion of R³ radicals is from 1 to 20 mol%, the proportion of R¹ radicals is from 30 to 75 mol% and the proportion of R² radicals is from 24 to 65 mol% based on the sum total of R¹, R² and R³ radicals.

4. Silicone copolymer according to at least one of Claims 1 to 3, **characterized in that** the R⁴ radical in the R¹ and R² radicals is identical.

5. Silicone copolymer according to Claim 4, **characterized in that** the R⁴ radicals are -C(O)-CH₃.

6. Silicone copolymer according to at least one of Claims 1 to 5, **characterized in that** R¹ is a - (CH₂)ₓ-O-(C₂H₄0)ₛ-(C₃H₆O)ₜ-(CH₂-CHR'-O)ᵤ-R⁴ moiety having an average molecular weight of from 100 to 2000 g/mol and R² is a -(CH₂)_{y}-O-(C₂H₄O)ₒ-(C₃H₆O)ₚ-(CH₂-CHR'-O)_{q}-R⁴ moiety having an average molecular weight from above 2000 to 8000 g/mol, where s, t and u are each independently from 0 to 100 provided that the sum total of s + t is above 0, o, p, q, R⁴ and R' are each as defined above, and x and y are each independently from 2 to 4.

7. Compositions comprising one or more silicone copolymers according to at least one of Claims 1 to 6, **characterized in that** the composition further comprises one or more substances usable in the production of polyurethane foams and selected from nucleating agents, cell-refining additives, cell openers, crosslinkers, emulsifiers, flame retardants, surfactants/emulsifiers, antioxidants, antistats, biocides, color pastes, solid fillers, amine catalysts, metal catalysts and buffering substances.

8. Process for producing a polyurethane foam, **characterized in that** a silicone copolymer according to at least one of Claims 1 to 6 or a composition according to Claim 7 is used.

9. Process according to Claim 8, **characterized in that** the polyurethane foam is produced using water, methylene chloride, pentane, alkanes, halogenated alkanes, acetone or carbon dioxide as blowing agent.

10. Process according to Claim 8 or 9, **characterized in that** the polyol component used utilizes polyols in part or exclusively which are based on natural raw materials.

11. Process according to at least one of Claims 8 to 10, **characterized in that** catalysts used comprise tin ricinoleate, silamorpholine and/or N,N-dimethylhexadecylamine.

12. Polyurethane foam obtainable by a process according to any one of Claims 8 to 11.

13. Article containing or consisting of a polyurethane foam according to Claim 12.

## Revendications

1. Copolymère de silicone de formule (I) 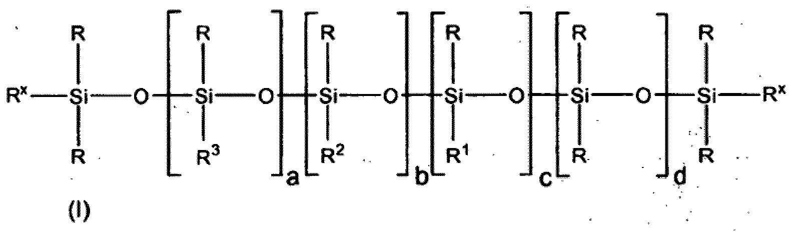 avec
a = 1 à 178,
b, c et d indépendamment les uns des autres 0 à 177, les radicaux R représentant indépendamment les uns des autres des radicaux alkyle identiques ou différents,
R¹ = radical hydrocarboné comprenant un oxygène identique ou différent,
R² = radical hydrocarboné comprenant un oxygène identique ou différent,
R³ = R^{3b},
R^{3b} = -(CH₂)_{z}-O-CH₂-C(CH₂CH₃)(CH₂OR_{y})-CH₂-O-CH₂-R¹⁰,
R^{x} = indépendamment les uns des autres R¹, R², R³ ou R, de préférence R³, avantageusement R,
R^{y} = indépendamment les uns des autres radical hydrogène, radical alkyle, radical acyle ou radical polyéther -(C₂H₄O)ₒ-(C₃H₆O)ₚ-(CH₂-CHR'-O)_{z}-R⁴ avec o, p et q indépendamment les uns des autres de 0 à 100, la somme o + p étant à chaque fois supérieure à 0, les R⁴ représentant indépendamment les uns des autres un radical hydrogène ou un groupe alkyle de 1 à 4 atomes C, un groupe -C(O)-R"' avec R"' = radical alkyle, un groupe -CH₂-O-R', un groupe alkylaryle ou un groupe -C(O)NH-R', les R' étant identiques ou différents et représentant un radical alkyle ou aryle non substitué ou éventuellement substitué, par exemple substitué avec des radicaux alkyle, des radicaux aryle, des halogènes ou des radicaux halogénoalkyle ou halogénoaryle, contenant au total 1 à 12 atomes de carbone, de préférence un radical méthyle, éthyle, décyle ou phényle,
R^{y} représentant de préférence un radical hydrogène,
z indépendamment les uns des autres 2 à 4,
les R¹⁰ étant identiques ou différents et représentant CH=CH₂ ou CH₂-CH₂-R⁹, et
les R⁹ étant identiques ou différents et représentant H ou un radical siloxane relié par R^{3'} de formule (Ia) 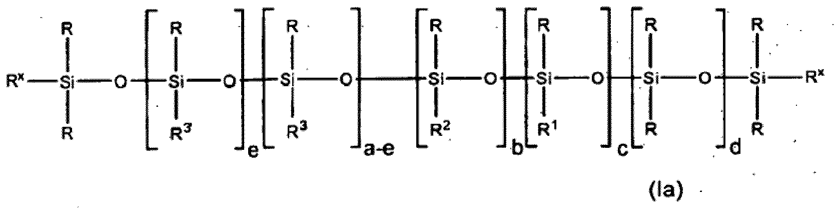 avec a à d, R, R^{x} et R¹ à R³ tels que définis précédemment pour la formule (I), la somme de a + e dans la formule (Ia) valant de préférence 1, à condition que la somme a + b + c + d par unité de formule (I) ou (Ia) vaille de 38 à 178, et que la somme des unités de formule (Ia) reliées par copolymère de silicone de formule (I) ne dépasse pas trois.

2. Copolymère de silicone selon la revendication 1, **caractérisé en ce que** les indices a, b et c sont choisis de sorte que la proportion des radicaux R³ soit de 1 à 30 % en moles et la proportion de la somme des radicaux R¹ et R² soit de 70 à 99 % en moles, par rapport à la somme des radicaux R¹, R² et R³.

3. Copolymère de silicone selon la revendication 2, **caractérisé en ce que** les indices a, b et c sont choisis de sorte que la proportion des radicaux R³ soit de 1 à 20 % en moles, que la proportion des radicaux R¹ soit de 30 à 75 % en moles et que la proportion des radicaux R² soit de 24 à 65 % en moles, par rapport à la somme des radicaux R¹, R² et R³.

4. Copolymère de silicone selon au moins l'une quelconque des revendications 1 à 3, **caractérisé en ce que** le radical R⁴ est identique dans les radicaux R¹ et R².

5. Copolymère de silicone selon la revendication 4, **caractérisé en ce que** les radicaux R⁴ représentent un radical -C(O)-CH₃.

6. Copolymère de silicone selon au moins l'une quelconque des revendications 1 à 5, **caractérisé en ce que** R¹ est un radical - (CH²)ₓ-O-(C₂H₄O)ₛ-(C₃H₆O)ₜ-(CH₂-CHR'-O)ᵤ-R⁴ d'un poids moléculaire moyen de 100 à 2 000 g/mol et R² est un radical - (CH₂)_{y}-O-(C₂H₄O)ₒ-(C₃H₆O)ₚ-(CH₂-CHR'-O)_{q}-R⁴ d'un poids moléculaire moyen de plus de 2 000 à 8 000 g/mol, avec s, t et u indépendamment les uns des autres de 0 à 100, la somme de s + t étant supérieure à 0, o, p, q, R⁴ et R' tels que définis précédemment, et x et y indépendamment l'un de l'autre de 2 à 4.

7. Compositions contenant un ou plusieurs copolymères de silicone selon au moins l'une quelconque des revendications 1 à 6, **caractérisées en ce que** la composition contient en outre une ou plusieurs substances utilisables lors de la fabrication de mousses de polyuréthane, choisies parmi les agents de nucléation, les additifs d'affinage cellulaire, les agents d'ouverture cellulaire, les agents de réticulation, les émulsifiants, les agents ignifuges, les tensioactifs/émulsifiants, les antioxydants, les antistatiques, les biocides, les pâtes colorantes, les charges solides, les catalyseurs aminés, les catalyseurs métalliques et les substances tampons.

8. Procédé de fabrication d'une mousse de polyuréthane, **caractérisé en ce qu'**un copolymère de silicone selon au moins l'une quelconque des revendications 1 à 6 ou une composition selon la revendication 7 est utilisé.

9. Procédé selon la revendication 8, **caractérisé en ce que** de l'eau, du chlorure de méthylène, du pentane, des alcanes, des alcanes halogénés, de l'acétone ou du dioxyde de carbone sont utilisés en tant qu'agent gonflant lors de la fabrication de la mousse de polyuréthane.

10. Procédé selon la revendication 8 ou 9, **caractérisé en ce que** des polyols à base de matières premières naturelles sont utilisés en partie ou en exclusivité en tant que composant polyol.

11. Procédé selon au moins l'une quelconque des revendications 8 à 10, **caractérisé en ce que** des catalyseurs comprenant du ricinolate d'étain, de la silamorpholine et/ou de la N,N-diméthylhexadécylamine sont utilisés.

12. Mousse de polyuréthane pouvant être obtenue par un procédé selon l'une quelconque des revendications 8 à 11.

13. Article contenant ou constitué par une mousse de polyuréthane selon la revendication 12.
